# EUROPEAN PATENT SPECIFICATION

(11) **EP 1 087 850 B1**
(45) Date of publication and mention of the grant of the patent: **26.02.2003**
(21) Application number: 99921138.6
(22) Date of filing: 11.05.1999
(51) Int. Cl.: B21D 53/02, B21C 37/22, B21C 37/09, F16L 9/14, F28F 1/08

(54) **BIMETALLIC CORRUGATED TUBE AND PROCESS FOR ITS MANUFACTURING**
BIMETALLISCHES WELLROHR UND VERFAHREN ZU DESSEN HERSTELLUNG
TUBE ONDULE BIMETALLIQUE ET PROCEDE DE FABRICATION CORRESPONDANT

(30) Priority: 01.06.1998 IT RM980350
(43) Date of publication of application: 04.04.2001
(73) Proprietor: Afatec S.r.l., 64024 Notaresco (IT)
(72) Inventor: DE NARDIS, Marco, Afatec s.r.l., 64024 Notaresco (IT)
(74) Representative: Iannone, Carlo Luigi
(86) International application number: IT9900129
(87) International publication number: WO99062654

(56) References cited:
- DE-A- 4 415 178
- DE-C- 447 401
- GB-A- 475 780
- US-A- 4 028 785

## Description

The present invention relates to a corrugated tube, and to a process for the manufacturing such a corrugated tube, according to the preamble of claims 1 and 4 respectively.

As it is well known, known corrugated tubes to realise gas/water, gas/gas, water/water heat exchangers are subjected to different kind of inner and outer corrosion.

In fact, exchange surfaces lapped by thermal vector fluids having different chemical-physical features and different enthalpic content, can be attacked and corroded in a completely different way on the inner and outer surfaces, particularly if fluids are in a different physical state (e.g. liquid/gaseous - vapour).

Particularly, in the heat exchangers of condensation gas boilers employing gaseous fuel, in which a partial recover of the condensation latent heat of the combustion products by a cooling process of the same under the dew point, the "flue gas side" surface is in contact with condensates having an acid pH value.

In this kind of boilers, exchange surfaces are particularly stressed with respect to the traditional heat exchangers since condensates have a [H₃O⁺] (aH₃O^{*}) > 10⁻⁷ F, with a pH value included between 3 and 4.5.

Furthermore, "flue gas side" surface is also in contact with gas and vapours at temperature between 1200 °C and 30 °C. The broad range of temperature to which exchangers material are subjected in this particular kind of application is due to the need of cooling the combustion products below their dew point.

In fact. "flue gas", which are at the beginning at temperatures close to those of the flame (which is essentially a function of the kind of fuel. and of the inlet of the air used) are cooled by different methods until under the condensation temperature ( for natural gas, in excess of 30%, said temperature is of about 55 °C).

The "water side" surfaces" are lapped by a thermal vector fluid which is assimilable to the water, but have a composition highly variable due to the numerous impurities present therein, so that they are subject of different kinds of chemical attack.

Substantially, the chemical and thermal variability of the different outer and inner environments of the tube makes very critic the choice of the material to realise the exchanger, able to suitably withstand, with acceptable costs, and in so different environments, and with so high levels of chemical variability.

Another problem is due to the inlet waters of the domestic boilers having a composition highly variable in function of the geographical location of the boiler and of the loading period of the same.

In fact, due to the chlorine adding, in the different periods of the year substantial differences of the alogenated solved within the water have been noted.

Further, as it is known, the presence of different carbonates and sulphates solved within the water varies for the different zones.

DE-A-4415178 discloses a tube providing an outer surface comprised of a material withstanding to an acid environment and an inner surface comprised of material withstandind to the water, according to the preamble of claim 1.

In view of the above, the applicant has realised a solution able to solve the above mentioned problems, providing different surfaces in contact with the fluids, said surfaces having features suitable for the specific fluid.

Particularly, after very long experiences in the water/gas heat exchanger field, it is now suggested according to the present invention a solution combining the peculiarity of two different materials, separately employed and thus separately tested, in the hydro-thermal-sanitary field.

Another advantage of the solution proposed according to the present invention is that of providing a tube having a resistance to the inner pressure higher than the known ones.

Furthermore, the tube according to the present invention is lighter than the known ones.

It is therefore specific object of the present invention a corrugated tube providing an outer surface comprised of a material withstanding to an acid environment and an inner surface comprised of a material withstanding to the water characterised in that said outer layer is comprised of stainless steel and said inner layer is comprised of copper and in that between said stainless steel outer layer and said copper inner layer a thermally conductive paste layer is provided.

Furthermore said outer layer is preferably comprised of stainless steel having a high Chromium and Nickel content.

Always according to a preferred embodiment of the invention, said inner layer is comprised of annealed copper.

The invention further concerns a process for the manufacturing the a corrugated tube as described in claim 4.

The present invention will be now described, for illustrative purposes, according to its preferred embodiments, with particular reference to the figures of the enclosed drawings, wherein:

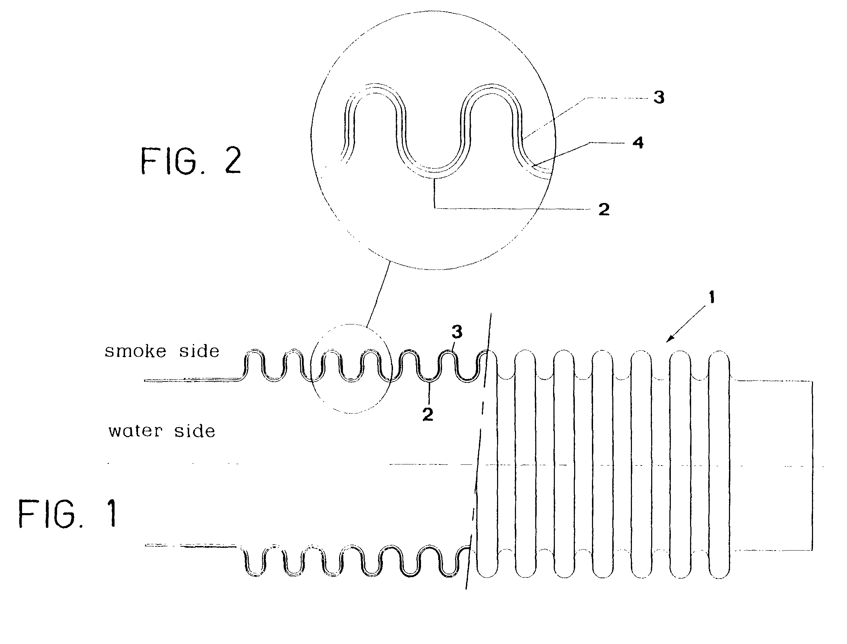

figure 1 is a partially broken away, lateral view of a corrugated tube according to the present invention; and
figure 2 shows a particular of the tube of figure 1.

Observing particularly the two enclosed figures, a corrugated tube according to the invention is shown, within which water flows and outside which flue gas flows.

The inner part 2 of the tube 1 is comprised of annealed copper, while the outer one 3 is comprised of stainless steel.

In the preferred embodiment illustrated, between the two copper 2 and stainless steel 3 parts it is provided the interposition of a thermally conductive paste layer 4.

The inner layer 2, due, on one side, to its optimum water resistance within a broad condition range, and, on the other side, to its inadequacy to be used in contact with the combustion products, has been used to realise the inner part of a corrugated tube exchanger.

Instead. stainless steel with a high Chromium and nickel content employed to realise the outer part 3, having an optimum resistance to an acid environment as the one of the combustion chamber of gas condensation boilers, has physical/chemical features able to ensure the necessary workability of the corrugated tube 1 and its resistance during the time.

During the tests carried out, it has been noted that the coupling of the two materials shown in the figures is the best solution with respect to the chemical resistance in different environments such those described in the introductive portion of the present specification.

Said solution allows to obtain remarkable advantages in the standard corrugated tubes field.

Furthermore, by the interposition of a thermally conductive paste 4 between the two copper 2 and stainless steel 3 layers during the tube 1 production, the drawback of the eventually reduced thermal conductivity of the heat exchanger due to the discontinuity between the two materials is prevented.

Coming now to shortly evaluate the production steps of a bimetallic corrugated exchanger employing tubes 1 according to the present invention, starting from the known technologies for the manufacturing of single material corrugated tubes, the copper smooth tube is inserted within the steel 3 smooth tube.

Diameter clearance between the two tubes 2 and 3 will be minimum to avoid dismantling dangerous for the heat conduction.

Eventually, between the two tubes 2 and 3 the conductive paste will be introduced, said paste improving the conductivity, and also promoting the relative sliding between the two materials.

In this way, the obtained product maintains very good flexibility properties.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Corrugated tube (1) providing an outer layer comprised of a material withstanding to an acid environment and an inner layer (2) comprised of a material withstanding to the water **characterised in that** said outer layer is comprised of stainless steel and said inner layer is comprised of copper, and **in that** between said stainless steel outer layer (3) and said copper inner layer (2) a thermally conductive paste layer is provided.

2. Corrugated tube according to claim 1, **characterised in that** said outer layer (3) is comprised of stainless steel having a high Chromium and Nickel content.

3. Corrugated tube according to one of the opreceding claims, **characterised in that** said inner layer (2) is comprised of annealed copper.

4. Process for the manufacturing of a corrugated tube according to one of the claims 1 - 3, in which an outer smooth tube comprised of a material withstanding to an acid environment and an inner smooth tube comprised of a material withstanding to the water are coupled, and than their corrugation is carried out according to the traditional techniques to corrugate simple tubes, **characterized in that** said material withstanding to an acid environment is comprised of stainless steel and said material withstanding to the water is comprised of copper, and **in that** between said two smooth tubes a thermally conductive paste layer is provided.

## Patentansprüche

1. Wellrohr (1), das eine äußere Schicht bietet, die aus einem gegenüber einer sauren Umgebung beständigen Material besteht, sowie eine innere Schicht (2), die aus einem wasserbeständigen Material besteht,
**dadurch gekennzeichnet, dass**
die äußere Schicht aus rostfreiem Stahl besteht und die innere Schicht aus Kupfer besteht und dass zwischen der äußeren Schicht (3) aus rostfreiem Stahl und der inneren Schicht (2) aus Kupfer eine wärmeleitfähige Pastenschicht vorgesehen ist.

2. Wellrohr nach Anspruch 1, **dadurch gekennzeichnet, dass** die äußere Schicht (3) aus rostfreiem Stahl mit einem hohen Gehalt an Chrom und Nickel besteht.

3. Wellrohr nach einem der vorhergehenden Ansprüche, **dadurch gekennzeichnet, dass** die innere Schicht (2) aus ausgeglühtem Kupfer besteht.

4. Verfahren zur Herstellung eines Wellrohrs nach einem der Ansprüche 1 - 3, bei welchem ein äußeres glattes Rohr, das aus einem gegenüber einer sauren Umgebung beständigen Material besteht, und ein inneres glattes Rohr, das aus einem wasserbeständigen Material besteht, verbunden werden und danach deren Wellung entsprechend herkömmlicher Verfahren zum Wellen einfacher Rohre erfolgt,
**dadurch gekennzeichnet, dass**
das einer sauren Umgebung widerstehende Material aus rostfreiem Stahl besteht und das wasserbeständige Material aus Kupfer besteht und dass zwischen den zwei glatten Rohren eine wärmeleitfähige Pastenschicht vorgesehen wird.

## Revendications

1. Tube ondulé (1) présentant une couche extérieure composée d'un matériau résistant à un environnement acide et une couche intérieure (2) composée d'un matériau résistant à l'eau, **caractérisé en ce que** ladite couche extérieure est composée d'acier inoxydable et ladite couche intérieure est composée de cuivre, et **en ce que** entre ladite couche extérieure d'acier inoxydable (3) et ladite couche intérieure de cuivre (2) une couche de pâte thermoconductrice est disposée.

2. Tube ondulé selon la revendication 1, **caractérisé en ce que** ladite couche extérieure (3) est composée d'acier inoxydable ayant de hautes teneurs en chrome et en nickel.

3. Tube ondulé selon l'une des revendications précédentes, **caractérisé en ce que** ladite couche intérieure (2) est composée de cuivre recuit.

4. Procédé pour la fabrication d'un tube ondulé selon l'une des revendications 1-3, selon lequel un tube extérieur lisse composé d'un matériau résistant à un environnement acide et un tube intérieur lisse composé d'un matériau résistant à l'eau sont accouplés, et ensuite leur ondulation est effectuée selon les techniques classiques d'ondulation des tubes simples, **caractérisé en ce que** ledit matériau résistant à un environnement acide est composé d'acier inoxydable et ledit matériau résistant à l'eau est composé de cuivre, et **en ce que** entre lesdits deux tubes lisses une couche de pâte thermoconductrice est disposée.
